(19) Europäisches Patentamt
European Patent Office
Office européen des brevets

(11) **EP 1 619 897 B1**

(12) **EUROPEAN PATENT SPECIFICATION**

(45) Date of publication and mention
of the grant of the patent:
**07.03.2007 Bulletin 2007/10**

(51) Int Cl.:
*H04N 7/18* *(2006.01)*    *H04N 5/232* *(2006.01)*

(21) Application number: **05015841.9**

(22) Date of filing: **21.07.2005**

(54) **Camera link system, camera device and camera link control method**

Kameraverbundsystem, Kameravorrichtung und Steuerverfahren für den Kameraverbund

Système d'appareil-photo en ligne, dispositif d'appareil-photo et méthode de contrôle d'appareil-photo en ligne

(84) Designated Contracting States:
**DE ES FR GB IT**

(30) Priority: **22.07.2004   JP 2004214426**

(43) Date of publication of application:
**25.01.2006   Bulletin 2006/04**

(73) Proprietor: **MATSUSHITA ELECTRIC INDUSTRIAL CO., LTD.**
**Kadoma-shi, Osaka 571-8501 (JP)**

(72) Inventors:
• **Kogane, Haruo**
**Kawasaki-shi**
**Kanagawa 214-0038 (JP)**
• **Nakamura, Yasuji**
**Yokohama-shi**
**Kanagawa 221-0865 (JP)**
• **Ogata, Tsuyoshi**
**Yokohama-shi**
**Kanagawa 222-0011 (JP)**
• **Maekawa, Koji**
**Yokohama-shi**
**Kanagawa 222-0012 (JP)**

(74) Representative: **Balsters, Robert et al**
**Novagraaf International S.A.**
**25, avenue du Pailly**
**1220 Les Avanchets - Geneva (CH)**

(56) References cited:
EP-A- 0 529 317              US-A1- 2002 052 708
US-A1- 2002 118 969       US-A1- 2002 135 682
US-A1- 2003 210 329

**Description**

BACKGROUND OF THE INVENTION

Field of the Invention

The present invention relates to a camera link system in which a plurality of cameras are linked to shoot the same subject.

Background

Conventionally, in the field of monitor cameras, a camera link system is proposed. In the camera link system, a plurality of cameras are disposed apart. Then, these multiple cameras change the directions thereof by a single trigger to shoot the same subject.

In such conventional camera link system, the shooting direction when linked is preset in each of cameras. Then, when a link operation is instructed, cameras turn to the preset directions. Accordingly, multiple cameras shoot the same subject.

In the traditional system, a link function is obtained only in the preset direction. Unlike this traditional system, a system has been conventionally proposed, which can obtain a link function with no preset. This type of system is configured of a master camera and a slave camera. When the master camera is rotated, the direction of the master camera is sent to an upper control device. The control device computes the direction of the slave camera to follow the master camera, that is, the direction of the slave camera to shoot the same subject as the master camera. Subsequently, the control device instructs the slave camera about the direction, and the slave camera is rotated in accordance with the instruction. When multiple slave cameras are disposed, the directions of the multiple slave cameras are sequentially computed and instructed.

Furthermore, in a camera link system disclosed in JP-A-2003-284050, when a master camera is rotated, the direction of the master camera is sent to slave cameras. Then, the directions of the slave cameras to follow the master camera are computed, and they are rotated so as to turn to the computed direction.

In the conventional camera link system described above, a series of processes are conducted in which a master camera is moved, the master camera then sends its direction to a control device, the control device computes the directions of slave cameras to instruct the slave cameras about the directions, and the slave cameras are moved. Also in the configuration in which slave cameras do computations, a similar series of processes are required. Since such a series of processes take time, it is likely to increase a time lag between the operations of the master camera and the slave camera.

Reference may be made to EP-A-0529317 which describes the pre-characterizing features of the present invention. Reference may also be made to US-A-2003/210329 and US-A-2002/118969.

SUMMARY OF THE INVENTION

The present invention is defined in the claims.

The invention has been made under the background. An advantage of the invention is that it can provide a camera link system in which a slave camera can quickly follow a master camera.

An embodiment of the invention defined in the claims may include a a camera link system. The camera link system includes: a plurality of camera devices rotatable; and a control device connected to the plurality of camera devices, wherein the control device provides master camera direction information that instructs a direction of a master camera selected from the plurality of camera devices to the plurality of camera devices including the master camera, and each camera device of the plurality of camera devices includes: a relative position information storing module which stores relative position information about the each camera device and the one or more other camera devices other than the each camera device; a direction information transforming module which transforms the master camera direction information to slave camera direction information that allows the each camera device to follow the master camera as a slave camera based on the relative position information when one of the one or more other camera devices is the master camera; and a rotation control module which controls a rotating mechanism of the each camera device in accordance with the master camera direction information when the each camera device is the master camera, and controls the rotating mechanism of the each camera device in accordance with the slave camera direction information when the each camera device is not the master camera.

According to the configuration, the control device provides the master camera direction information to the plurality of cameras. Each of the cameras is rotated in accordance with the master camera direction information when it functions as the master camera. Furthermore, each of the cameras transforms the master camera direction information to the slave camera direction information based on relative position information when it functions as the slave camera, and is rotated in accordance with the slave camera direction information. In this manner, the same master camera direction information is sent to the plurality of cameras, and the operations of the master camera and the slave camera are simultaneously conducted. Thus a time lag between the operations of the master camera and the slave camera (delay of the slave camera) is reduced.

An other embodiment of the invention defined in the claims includes a camera device. The camera device includes: a relative position information storing module which stores relative position information about the camera device and the one or more other camera devices other than the camera device; a communication module which is connected to a control device along with the one or more other camera devices and receives master camera direction information that instructs a direction of a master camera selected from a plurality of camera devices including the camera device and the one or more other camera devices; a direction information transforming module which transforms the master camera direction information to slave camera direction information that allows the camera device to follow the master camera based on the relative position information when one of the one or more other camera devices is the master camera; and a rotation control module which controls a rotating mechanism of the camera device in accordance with the master camera direction information when the camera device is the master camera, and controls the rotating mechanism of the camera device in accordance with the slave camera direction information when the camera device is not the master camera. According to the configuration, similarly to the aspect of the camera link system, a time lag between the operations of the master camera and the slave camera can be reduced.

Besides, the camera device may include: a master/slave determining module which determines whether the camera device is the master camera based on the master camera direction information provided by the control device; and a master camera identifying module which identifies a master camera among the other camera devices when the camera device is not the master camera, wherein the direction information transforming module may transform the master camera direction information to the slave camera direction information based on the relative position information of one of the other camera devices identified by the master camera identifying module in relative position information about the other camera devices stored in the relative position information storing module. According to the configuration, the camera device can follow the master camera identified among the plurality of other cameras. Therefore, a preferable link function can be obtained even though the number of cameras is large.

Furthermore, in the camera device, the communication module may take in the master camera direction information regardless of whether a destination is for the camera device or one of the one or more other camera devices; and the master/slave determining module and the master camera identifying module may conduct a determination process and a identifying process based on destination information in the master camera direction information. According to the configuration, a preferable link function can be obtained by a simple configuration in which information destined for the other camera is taken by communications.

As described above, in the invention, the slave camera can quickly follow the master camera, and a time lag between the operations of the master camera and the slave camera can be reduced.

BRIEF DESCRIPTION OF THE DRAWINGS

The accompanying drawings are incorporated in and constitute a part of this specification. The drawings exemplify certain aspects of the invention and, together with the description, serve to explain some principles of the invention.

　　　Fig. 1 is a block diagram illustrating a camera link system of an embodiment according to the invention;
　　　Fig. 2 is a block diagram illustrating the configuration of a camera device;
　　　Fig. 3 is a diagram illustrating an exemplary position information table;
　　　Fig. 4 is a diagram illustrating a transformation process of a master camera direction to a slave camera direction;
　　　Fig. 5 is a diagram illustrating a transformation process of a master camera direction to a slave camera direction; and
　　　Fig. 6 is a flow chart illustrative of the operation of the camera link system.

DETAILED DESCRIPTION

The following detailed description refers to the accompanying drawings. Although the description includes exemplary implementations, other implementations are possible and changes may be made to the implementations described without departing from the scope of the invention. The following detailed description and the accompanying drawings do not limit the invention. Instead, the scope of the invention is defined by the appended claims.

Hereinafter, a camera link system of an embodiment according to the invention will be described with reference to the drawings.

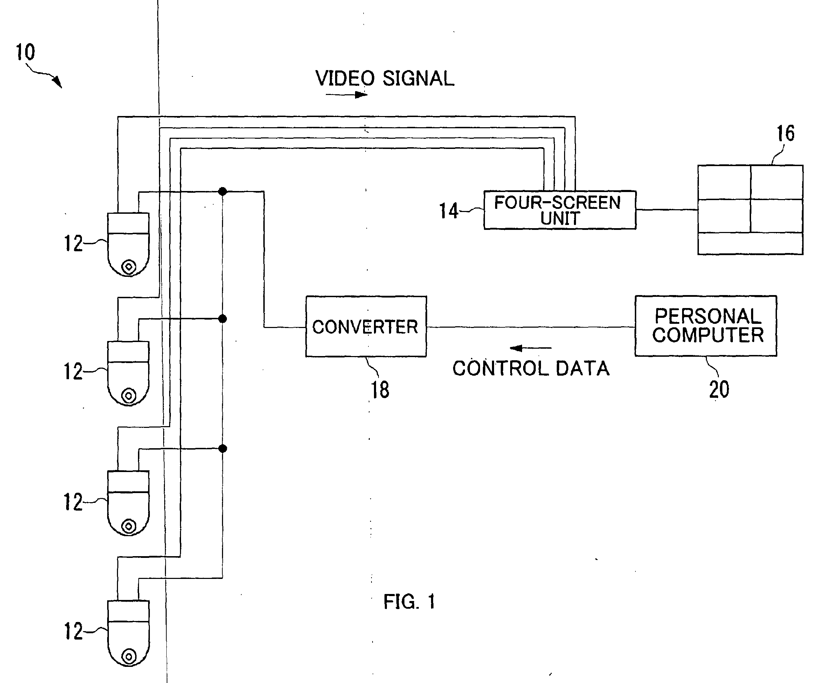

Fig. 1 depicts a camera link system of the embodiment. In Fig. 1, a camera link system 10 has four camera devices 12. The camera device 12 is a monitor camera device disposed on a ceiling downward. The four monitor camera devices 12, not shown, are disposed apart. The camera device 12 has a rotating stage or head, which can be rotated in a pan direction and a tilt direction.

Four monitor cameras 12 are connected to a four-screen unit 14, and the four-screen unit 14 is connected to a master monitor 16. Furthermore, the four monitor cameras 12 are connected to a personal computer 20 through a converter 18 of RS232C or RS485.

In the camera link system 10 shown in Fig. 1, the four camera devices 12 send video signals to the four-screen unit 14. The four-screen unit 14 displays images from the four camera devices 12 on the master monitor 16. As shown in the drawing, the screen of the master monitor 16 is split into four areas, and four camera images are displayed at the same time.

Moreover, the personal computer 20 sends control data that instructs camera operations to the four camera devices 12. The four camera devices 12 are operated in accordance with the control data from the personal computer 20. The control data is sent in the form of command strings to instruct various operations. The command string also includes a command of camera rotation.

As for the command of the rotation instruction, the personal computer 20 selects a master camera from the four camera devices 12. Then, a command indicating master camera direction information is sent. The master camera direction information is information that indicates a shooting direction of the master camera. The master camera direction information may be the absolute direction of the master camera. The master camera direction information may also be information about the directional variation (rotation angle) such as which direction is oriented at what degrees.

To the command of the master camera direction information, an address of the master camera selected from the four camera devices 12 is added. The command is then sent to the master camera. The master camera receives the master camera direction information, and is rotated in accordance with the master camera direction information.

Moreover, in the embodiment, the three remaining slave cameras also receive the command of the master camera direction information. A slave camera transforms the master camera direction information to slave camera direction information. The slave camera direction information is the direction of the camera to follow the master camera as the slave camera. More specifically, the slave camera direction information is the direction of that camera to turn to the same subject as the master camera shoots. Similarly to the master camera direction, the slave camera direction may be the absolute direction of the camera, or information about the directional variation (rotation angle) such as which direction is oriented at what degrees. The slave camera is rotated in accordance with the transformed slave camera direction information.

In this manner, in the embodiment, a single camera device 12 functions as a master camera, and the remaining camera devices 12 function as slave cameras. In the embodiment, the same camera device 12 is configured to also function as a master camera and a slave camera, as described below.

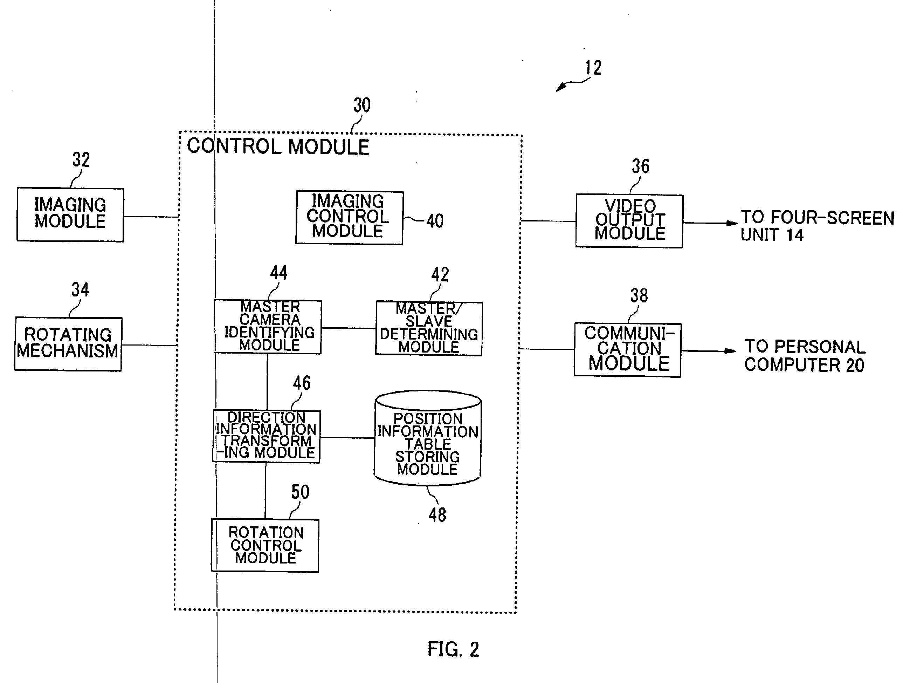

Fig. 2 depicts a block diagram illustrating the configuration of the camera device 12. The camera device 12 has a control module 30, an imaging module 32, a rotating mechanism 34, a video output module 36, and a communication module 38. The control module 30 is configured of a computer to control the entire camera device 12. The control module 30 may be configured of multiple computers, for example, a computer for imaging or image-pickup control and a computer for rotation control.

The imaging module 32 including a lens and an imaging element such as CCD generates a video signal, and supplies it to the control module 30. In the control module 30, an imaging control module 40 processes the video signal. Then, the imaging control module 40 controls the video output module 36, and sends the video signal to the four-screen unit 14.

The rotating mechanism 34 has a pan mechanism and a tilt mechanism, and the pan mechanism and the tilt mechanism have a pan motor and a tilt motor. The rotating mechanism 34 is controlled by the control module 30 to rotate the camera device 12 in the pan direction and the tilt direction.

The communication module 38 communicates with the personal computer 20, receives control data, and supplies it to the control module 30. As described above, as for camera rotation, the command of master camera direction information is received as control data. The master camera direction information is received even though the command address is that of the other camera.

As for camera rotation, the control module 30 has a master/slave determining module 42, a master camera identifying module 44, a direction information transforming module 46, a position information table storing module 48, and a rotation control module 50.

The master/slave determining module 42 extracts the command address of the master camera direction information, and determines whether the camera itself is a master camera. When the command address is that of the camera, the camera itself is the master camera.

The master camera identifying module 44 identifies a master camera among the other cameras when the camera itself is not the master camera. In order to identify a master camera, the command address is checked and a camera indicated by the address is identified as the master camera.

The direction information transforming module 46 functions when the camera itself is not the master camera.

The direction information transforming module 46 transforms master camera direction information to slave camera direction information based on relative position information about the camera and the master camera. As described above, slave camera direction information is the direction of the camera to follow the master camera as a slave camera. The relative position information about that camera and the master camera is stored in the position information table storing module 48.

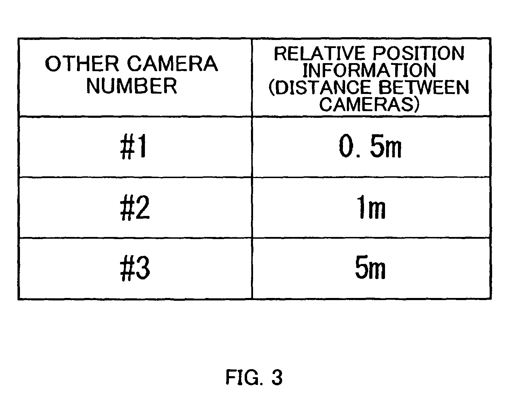

Fig. 3 depicts an exemplary position information table. The position information table-is a table for relative position between the camera itself and each of the three other cameras. Here, in the embodiment, the height of all the cameras is the same, and the direction of the origin point of horizontal rotation is also set the same. In this case, relative position information is shown by the distance between both cameras.

The direction information transforming module 46 reads relative position information of the master camera identified by the master camera identifying module 44 out of three items of relative position information in the position information table. Then, the direction information transforming module 46 transforms the master camera direction information to slave camera direction information based on the relative position information.

Return to Fig. 2, the rotation control module 50 controls the rotating mechanism 34 to rotate the camera. When the camera is the master camera, the rotation control module 50 rotates the rotating mechanism 32 in accordance with the master camera direction information received from the personal computer 20. When the camera is the slave camera, the rotation control module 50 operates in accordance with the slave camera direction information transformed by the direction information transforming module 46.

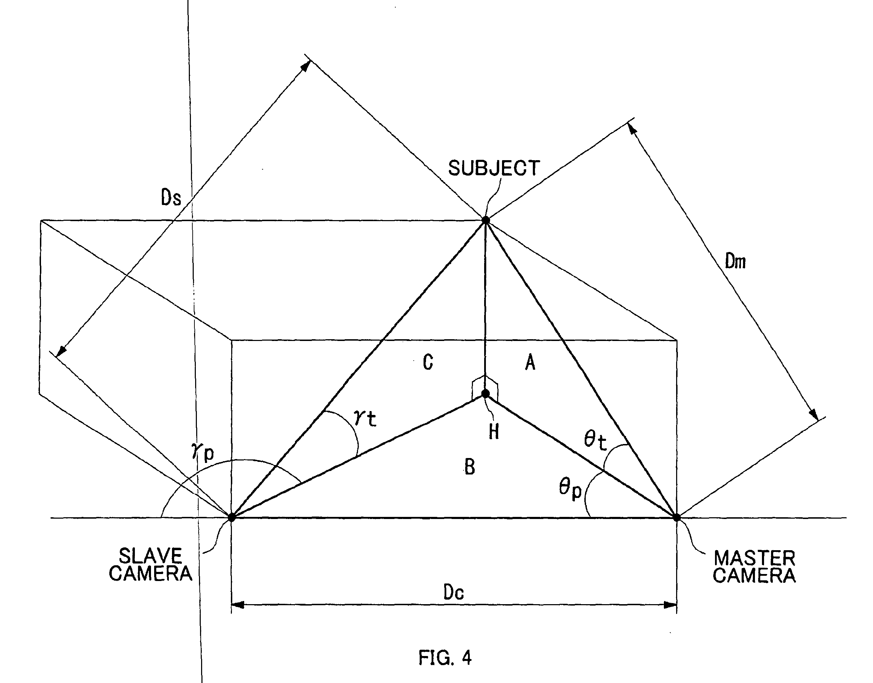

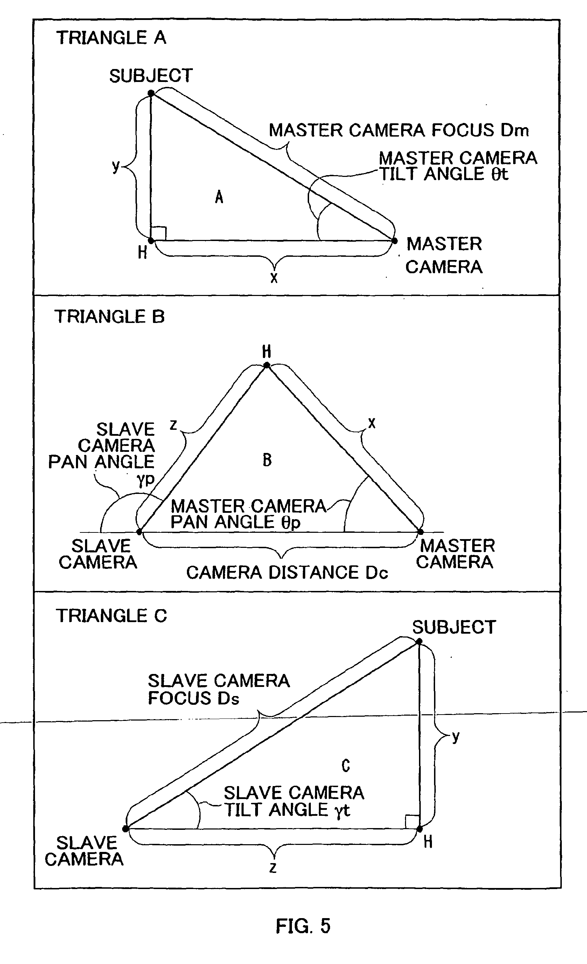

Figs. 4 and 5 depict exemplary transformation equations from master camera direction information to slave camera direction information. In the drawings, for easy understandings for computation equations, the drawings are turned upside down. In the example shown in Fig. 4, as described above, the height of cameras is the same and the direction of the origin point of horizontal rotation is also the same. Since such the arrangement is adapted, projection in a two dimensional space allows transformation of the master camera direction information to slave camera direction information.

In Figs. 4 and 5, the master camera direction is expressed by the master camera tilt angle θt and the master camera pan angle θp. Furthermore, the slave camera direction is expressed by the slave camera tilt angle γt and the slave camera pan angle γp. Besides, the master camera focus Dm is a distance between a master camera and a subject. The slave camera focus Ds is a distance between a slave camera and a subject. Furthermore, the camera distance Dc is a distance between a master camera and a slave camera. The camera distance Dc is equivalent to relative position information. The camera distance Dc is 5 m, for example.

Moreover, in Figs. 4 and 5, the point H is the intersection point of the normal from the subject to a horizontal plane and the horizontal plane where the master camera and the slave camera are placed. Then, the triangle A has vertices of the master camera, the subject and the point H. The triangle B has vertices of the master camera, the slave camera and the point H. The triangle C has vertices of the slave camera, the subject and the point H. The triangle B is a projection of a triangle formed of the master camera, the slave camera and the subject toward a horizontal plane.

Fig. 5 is a diagram that these triangles are seen from the front. In the drawing, y is a distance between the subject to the point H. x is a distance between the master camera to the point H. z is a distance between the slave camera to the point H. x, y, and z are expressed by the following equations with the master camera tilt angle θt, the master camera pan angle θp, the master camera focus Dm, and the camera distance Dc.

$$\mathtt{x = cos(\pi \div 180 \times \theta t) \times Dm}$$

$$\mathtt{y = sin(\pi \div 180 \times \theta t) \times Dm}$$

$$\mathtt{z = (x^2 + Dc^2 - 2 \times x \times Dc \times cos(\pi \div 180 \times \theta p))^{0.5}}$$

Then, the slave camera pan angle γp is expressed by the following equations with x, z and the camera distance Dc.

"In the case where the tilt angle is an angle of 90 degrees or below and the pan angle is an angle of 180 degrees or below":

$$\gamma p = 180 - ((acos((Dc^2 + z^2 - x^2) \div (2 \times Dc \times z))) \div (\pi \div 180))$$

"In the case where the tilt angle is an angle of 90 degrees or below and the pan angle is an angle above 180 degrees":

$$\gamma p = 180 + ((acos((Dc^2 + z^2 - x^2) \div (2 \times Dc \times z))) \div (\pi \div 180))$$

"In the case where the tilt angle is an angle above 90 degrees and the pan angle is an angle of 180 degrees or below":

$$\gamma p = (acos((Dc^2 + z^2 - x^2) \div (2 \times Dc \times z))) \div (\pi \div 180)$$

"In the case where the tilt angle is an angle above 90 degrees and the pan angle is an angle above 180 degrees":

$$\gamma p = 360 - ((acos((Dc^2 + z^2 - x^2) \div (2 \times Dc \times z))) \div (\pi \div 180))$$

In addition, the slave camera focus Ds and the slave camera tilt angle $\gamma t$ are expressed by the following equations with y and z.

$$Ds = (z^2 + y^2 - 2 \times z \times y \times cos(\pi \div 180 \times 90))^{0.5}$$

"In the case where the tilt angle is an angle of 90 degrees or below":

$$\gamma t = (acos((z^2 + Ds^2 - y^2) \div (2 \times z \times Ds))) \div (\pi \div 180)$$

"In the case where the tilt angle is an angle above 90 degrees":

$$\gamma t = 180 - ((acos((z^2 + Ds^2 - y^2) \div (2 \times z \times Ds))) \div (\pi \div 180)$$

By doing the transformation process in accordance with the equations, the master camera directions ($\theta p$, $\theta t$) are transformed to the slave camera directions ($\gamma p$, $\gamma t$) based on the relative position (the camera distance Dc) between the master camera and the slave camera. Besides, the slave ZOOM range is determined from Dc with reference to the stored table.

Next, the operation of the camera link system of the embodiment will be described. In the personal computer 20, one of the four camera devices 12 is selected as a master camera in accordance with user's input operation. Furthermore, in the personal computer 20, master camera direction information is generated in accordance with user's input operation. As described above, the master camera direction information is information indicating the shooting direction of the master camera. Then, the personal computer 20 sends a command corresponding to the master camera direction information. To the command, an address of the selected master camera is added.

The command of the master camera direction information is sent to the four camera devices 12 through the converter. The individual cameras apparatus 12 receive the command to operate as below.

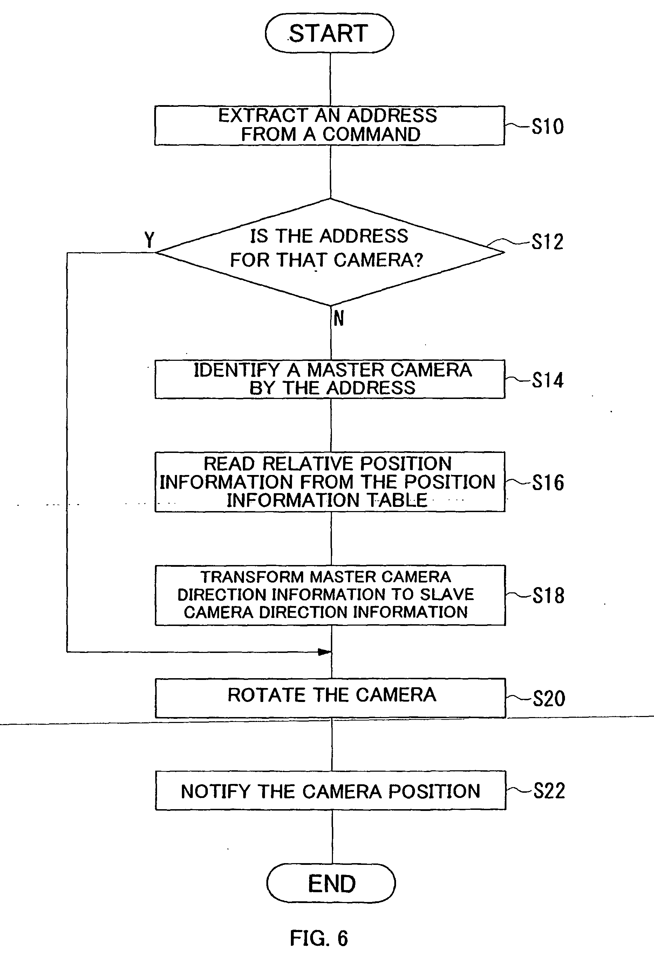

Fig. 6 depicts the operation of a camera device 12 when it receives the command. In the control module 30 of the camera device 12, the master/slave determining module 42 extracts the command address of the master camera direction information (S10), and determines whether the command is destined for the camera itself (S12). When the command is destined for the camera (YES at S12), the camera itself is a master camera. In this case, the rotation control module 50 controls the rotating mechanism 34 in accordance with the master camera direction information indicated by the command to rotate the camera (S20) . Proper coordinate transformation or the like may be conducted for this control. Then, the camera position after rotated is notified to the personal computer 20 through the communication module 38 (S22).

On the other hand, when the command is not destined for the camera itself(No at S12), the camera is not the master camera. In this case, the master camera identifying module 44 identifies the master camera among the other cameras (S14). The master camera identifying module 44 identifies one of the other cameras indicated by the command address as the master camera.

When the master camera is identified, the direction information transforming module 46 refers to the position information table storing module 48 to read relative position information about the master camera and the camera (S16). Then, the direction information transforming module 46 transforms the master camera direction information to slave camera direction information based on the relative position information (S18). As described above, the slave camera direction is the camera direction (the shooting direction) for the camera to follow the master camera as the slave camera.

When the master camera direction information is transformed to the slave camera direction information, the rotation control module 50 controls the rotating mechanism 34 in accordance with the slave camera direction information to rotate the camera (S20). Subsequently, the position of the camera after rotated is notified to the personal computer 20 through the communication module 38 (S22).

When the individual camera devices 12 are operated in accordance with the steps shown in Fig. 6, the entire camera link system 10 is operated as below. The four camera devices 12 receive the master camera direction information from the personal computer 20 regardless of whether it is the master camera or not. The master camera among the four camera devices 12 is rotated in accordance with the master camera direction information. The three remaining camera devices 12 transform the master camera direction information to slave camera direction and are rotated in accordance with the slave camera direction information. In this manner, a single camera device 12 is rotated as a master camera, and the three remaining camera devices 12 follow the master camera as slave cameras. At this time, since all the cameras simultaneously receive and process the master camera direction information, the master camera and the slave cameras are operated almost at the same time.

In addition, although it is not discussed in the description above, the camera device 12 performs a travel limitation process as below when it functions as a slave camera. The shootable range is varied in the slave camera and the master camera. Therefore, when master camera direction is transformed to slave camera direction, the slave camera direction is sometimes deviated from the shooting range of the slave camera. When the slave camera direction is deviated from the shooting range, the slave camera performs the travel limitation process. In this process, for example, the slave camera stays at the same place, not following the master camera. Furthermore, for example, the slave camera may be rotated to the end of the shooting range to follow the master camera within the possible range.

Moreover, the tracking area may be limited on the camera side. In the camera arrangement situation that computing error is large, a calibration command may be sent at every time when a proper time period elapses. For example, a command that instructs moving to a home position is sent to the master camera. The slave cameras may stop following the master camera to return in a normal monitor state when this command is sent.

Besides, the camera device 12 may be configured to operate automatically in a predetermined time period. The camera device 12 may operate automatically in accordance with the operation instruction by an operator. During the automatic operation, the link operation needs to be limited in order to separately operate the individual cameras. In regard to this point, in the embodiment, the link operation is conducted at the time when a command is sent from the controller (the personal computer), and thus the automatic operation can be conducted easily.

Furthermore, in the description, the communication form of RS232C or the like is used. However, the communication form is not necessarily defined. For example, IPv6 may be adapted. In IPv6, multicasting (broadcast communication) is supported. Therefore, the master camera direction information can be distributed to multiple camera devices easily.

Moreover, when the embodiment is applied to network cameras, an operation instruction including a master camera identification number and a master camera direction (position coordinates) is sent by using a specific network port. This information is sent to a master camera and multiple slave cameras at the same time. In these data transfer, the transmission forms of the master camera and the slave cameras may be the same or different.

Besides, in network cameras, the camera link system may be configured such that the operation by an authorized operator is given preference over automatic operations. Furthermore, a system configurator being an administrator can give preference to automatic operations above, and the setting of this selection can be done on the camera side. Thus, operations can be set in fine steps in each area, that is, at each camera, and flexibility can be provided to access from a global network.

Furthermore, in the embodiment, as described with Fig. 6, the individual camera devices 12 send information about the camera direction to the personal computer 20. The camera direction may be sent in a form of coordinate data.

In the personal computer 20, the camera directions are shown on a map such as a control geographical data map or the like (a map of monitor places (for example, a drawing of the inside of a room)) . The orientation of the camera horizontal direction (the pan direction) is indicated by arrows, for example. An angle of view is expressed in a fan shape. The orientation of the vertical direction (the tilt direction), the power of lenses, zooming ratio, and the focus distance are expressed in text. These items of information may be shown for a predetermined time period when movement is updated. Moreover, these items of information may be shown in the master monitor 16.

As described above, the camera link system 10 of the embodiment has been described. According to the embodiment, master camera direction information is provided to the master camera and the slave camera simultaneously. The master camera is rotated in accordance with the master camera direction information. The slave camera transforms the master camera direction information to slave camera direction information based on relative position information, and is rotated in accordance with the slave camera direction information. In this manner, master camera direction information is sent to not only the master camera but also the slave camera, and the operations of the master camera and the slave camera are simultaneously conducted. Therefore, a time lag between the operations of the master camera and the slave camera is reduced, and the slave camera quickly follows the master camera.

Moreover, in the embodiment, the same camera device 12 is configured to also function as a master camera and a slave camera. Thus, when a master camera is properly selected from multiple camera devices 12, the remaining camera devices 12 follow the master camera. An operator can manipulate a given camera device 12 as a master camera, and therefore the convenience of operators can be improved.

Besides, a camera device 12 of the embodiment determines whether the camera itself is a master camera, it identifies a master camera among the other multiple cameras when the camera itself is not the master camera, and acquires relative position information about the identified master camera and the camera to determine slave camera direction information from relative position information. In this manner, a preferable link function can be obtained even though the number of cameras is large.

In addition, the camera device 12 of the embodiment extracts master camera direction information regardless of whether the destination is for the camera itself or the other camera, and conducts determination about the master camera based on the destination of the extracted master camera information. When the destination is for one of the other cameras, this camera indicated by the destination is the master camera. In this manner, a simple configuration in which information destined for one of the other cameras is extracted by communications can obtain a preferable link function of the embodiment.

Persons of ordinary skill in the art will realize that many modifications and variations of the above embodiments may be made without departing from the scope of the present invention defined by the appended claims.

## Claims

1. A camera link system comprising:

   a plurality of camera devices (12) including a master camera and a slave camera that follows the master camera; and
   a control device (18, 20) connected to the plurality of camera devices;

   wherein the control device provides master camera direction information that instructs a direction of a master camera among the plurality of camera devices to the plurality of camera devices;
   the master camera device is configured to control a rotating mechanism (34) in accordance with the master camera direction information,
   **characterized in that**:

   the slave camera device is responsive to the same master camera direction information as the master camera device;
   the slave camera is configured to transform the master camera direction information to slave camera direction information that allows the slave camera to follow the master camera based on relative position information about the master camera and the slave camera, said relative position information being stored at the slave camera; and
   the slave camera is configured to control a rotating mechanism (34) in accordance with the slave camera direction information.

2. A camera device (12) that is operable in a master camera operating mode and in a slave camera operating mode; the camera device comprising:

a communication module (38) for coupling to a control device along with one or more other camera devices, and for receiving from the control device master camera direction information that instructs a direction of a master camera selected from a plurality of camera devices including the camera device and the one or more other camera devices;

**characterized in that**:

the camera device is responsive to the same master camera direction information both when the camera device is the master camera and when the camera device is a slave camera; and the camera device further comprises:

a relative position information storing module (48) for storing relative position information about the camera device and the one or more other camera devices;

a direction information transforming module (46) for transforming the master camera direction information to slave camera direction information that allows the camera device to follow the master camera based on the relative position information when one of the one or more other camera devices is the master camera; and

a rotation control module (50) for controlling a rotating mechanism (34) of the camera device in accordance with the master camera direction information when the camera device is the master camera device, and for controlling the rotating mechanism (34) of the camera device in accordance with the slave camera direction information when the camera device is not the master camera.

3. The camera device according to claim 2 **characterized in that** the camera device comprises:

a master/slave determining module (42) which determines whether the camera device is the master camera based on the master camera direction information provided by the control device; and

a master camera identifying module (44) which identifies a master camera among the other camera devices when the camera device is not the master camera,

wherein the direction information transforming module (46) transforms the master camera direction information to the slave camera direction information based on the relative position information of one of the other camera devices identified by the master camera identifying module (44) in relative position information about the other camera devices stored in the relative position information storing module (48).

4. The camera device according to claim 3, **characterized in that** the communication module (38) takes in the master camera direction information regardless of whether a destination is for the camera device or one of the one or more other camera devices; and

the master/slave determining module (42) and the master camera identifying module (44) conduct a determination process and a identifying process based on destination information in the master camera direction information.

5. A camera link system comprising:

a plurality of rotatable camera devices (12);
a control device (18, 20) connected to the plurality of camera devices,

wherein the control device is configured to provide master camera direction information that instructs a direction of a master camera selected from the plurality of camera devices to the plurality of camera devices including the master camera;
**characterized in that**:

at least one of the camera devices (12) is a camera device as defined in any of claims 2 to 4.

6. The camera link system according to claim 5, wherein each of said plurality of rotatable camera devices (12) is a camera device as defined in any of claims 2 to 4.

7. A camera link control method comprising:

providing master camera direction information that instructs a direction of a master camera to a plurality of cameras including the master camera and a slave camera that follows the master camera;
at the master camera:

receiving the master camera direction information; and
controlling (S12, S20) a rotating mechanism of the master camera in accordance with the master camera direction information;

**characterized in that** the method further comprises:

at a slave camera:

receiving the same master camera direction information as the master camera;
transforming (S12-S18) the master camera direction information to slave camera direction information that allows the slave camera to follow the master camera based on relative position information stored in the slave camera about the master camera and the slave camera; and
controlling (S20) a rotating mechanism of the slave camera in accordance with the slave camera direction information.

**Patentansprüche**

1. Kameraverbundsystem, umfassend:

eine Mehrzahl von Kameravorrichtungen (12) einschliesslich einer Master-Kamera und einer Slave-Kamera, die der Master-Kamera folgt; und
eine mit der Mehrzahl von Kameravorrichtungen verbundene Steuervorrichtung (18, 20);

worin die Steuervorrichtung Masterkamera-Richtungsinformation liefert, die der Mehrzahl von Kameravorrichtungen die Richtung einer Masterkamera aus der Mehrzahl von Kameravorrichtungen weist;
die Masterkameravorrichtung konfiguriert ist, einen Drehmechanismus (34) in Übereinstimmung mit der Masterkamera-Richtungsinformation zu steuern,
**dadurch gekennzeichnet, dass**:

die Slavekameravorrichtung auf die gleiche Masterkamera-Richtungsinformation anspricht wie die Masterkameravorrichtung;
die Slavekamera konfiguriert ist, die Masterkamera-Richtungsinformation in Slavekamera-Richtungsinformation umzuwandeln, die es der Slavekamera ermöglicht, auf der Grundlage relativer Positionsdaten für die Masterkamera und die Slavekamera der Masterkamera zu folgen, wobei die relativen Positionsdaten bei der Slavekamera gespeichert werden; und
die Slavekamera konfiguriert ist, einen Drehmechanismus (34) in Übereinstimmung mit der Slavekamera-Richtungsinformation zu steuern.

2. Kameravorrichtung (12), die in einem Master-Kamerabetriebsmodus und in einem Slave-Kamerabetriebsmodus betrieben werden kann; wobei die Kameravorrichtung umfasst:

einen Kommunikationsmodul (38), um zusammen mit einer oder mehreren anderen Kameravorrichtungen an eine Steuervorrichtung angekoppelt zu werden, und um von der Steuervorrichtung Masterkamera-Richtungsinformation zu empfangen, die die Richtung einer Masterkamera weist, die aus einer Mehrzahl von Kameravorrichtungen einschliesslich der Kameravorrichtung und der einen oder mehreren anderen Kameravorrichtungen ausgewählt ist;

**dadurch gekennzeichnet, dass**:

die Kameravorrichtung auf die gleiche Masterkamera-Richtungsinformation anspricht, wenn die Kameravorrichtung die Masterkamera ist und wenn die Kameravorrichtung eine Slavekamera ist; und die Kameravorrichtung des Weiteren umfasst:

einen Speichermodul (48) für relative Positionsdaten, um relative Positionsdaten über die Kameravorrichtung und die eine oder mehreren anderen Kameravorrichtungen zu speichern;
einen Umformmodul (46) für Richtungsinformation, um die Masterkamera-Richtungsinformation in Slavekamera-Richtungsinformation umzuwandeln, die es der Kameravorrichtung ermöglicht, auf der Grundlage der relativen Positionsdaten der Masterkamera zu folgen, wenn eine von der einen oder mehreren anderen Kameravorrichtungen die Masterkamera ist; und

einen Drehsteuermodul (50), um den Drehmechanismus (34) der Kameravorrichtung in Übereinstimmung mit der Masterkamera-Richtungsinformation zu steuern, wenn die Kameravorrichtung die Masterkameravorrichtung ist, und um den Drehmechanismus (34) der Kameravorrichtung in Übereinstimmung mit der Slavekamera-Richtungsinformation zu steuern, wenn die Kameravorrichtung nicht die Masterkamera ist.

3. Kameravorrichtung nach Anspruch 2, **dadurch gekennzeichnet, dass** die Kameravorrichtung umfasst:

einen Master-Slave-Bestimmungsmodul (42), der auf der Grundlage der durch die Steuervorrichtung gelieferten Masterkamera-Richtungsinformation bestimmt, ob die Kameravorrichtung die Masterkamera ist; und einen Masterkamera-Identifizierungsmodul (44), der eine Masterkamera unter den anderen Kameravorrichtungen identifiziert, wenn die Kameravorrichtung nicht die Masterkamera ist,

worin der Richtungsinformations-Umwandlungsmodul (46) auf der Grundlage der relativen Positionsdaten einer der anderen Kameravorrichtungen, die durch den Masterkamera-Identifizierungsmodul (44) in den relativen Positionsdaten für die anderen Kameravorrichtungen identifiziert worden ist, die im Speichermodul (48) für relative Positionsdaten gespeichert sind, die Masterkamera-Richtungsinformation in Slavekamera-Richtungsinformation umwandelt.

4. Kameravorrichtung nach Anspruch 3, **dadurch gekennzeichnet, dass** der Kommunikationsmodul (38) die Masterkamera-Richtungsinformation ungeachtet dessen hereinnimmt, ob ein Ziel für die Kameravorrichtung oder für eine von der einen oder mehreren anderen Kameravorrichtungen vorgegeben wird; und der Master-Slave-Bestimmungsmodul (42) und der Masterkamera-Identifizierungsmodul (44) auf der Grundlage von Zielinformation in der Masterkamera-Richtungsinformation einen Bestimmungsprozess und einen Identifizierungsprozess ausführen.

5. Kameraverbundsystem, umfassend:

eine Mehrzahl drehbarer Kameravorrichtungen (12);
eine an die Mehrzahl von Kameravorrichtungen angeschlossene Steuervorrichtung (18, 20),

worin die Steuervorrichtung konfiguriert ist, Masterkamera-Richtungsinformation zu liefern, die der Mehrzahl von Kameravorrichtungen einschliesslich der Masterkamera die Richtung einer Masterkamera weist, die aus der Mehrzahl von Kameravorrichtungen ausgewählt ist;
**dadurch gekennzeichnet, dass**:

zumindest eine der Kameravorrichtungen (12) eine Kameravorrichtung ist, wie sie in einem der Ansprüche 2 bis 4 definiert ist.

6. Kameraverbundsystem nach Anspruch 5, worin jede der Mehrzahl drehbarer Kameravorrichtungen (12) eine Kameravorrichtung ist, wie sie in einem der Ansprüche 2 bis 4 definiert ist.

7. Kameraverbund-Steuerverfahren, umfassend:

Masterkamera-Richtungsinformation zur Verfügung zu stellen, die einer Mehrzahl von Kameras einschliesslich der Masterkamera und einer Slavekamera, die der Masterkamera folgt, die Richtung einer Masterkamera weist; bei der Masterkamera:

die Masterkamera-Richtungsinformation zu empfangen; und
den Drehmechanismus der Masterkamera in Übereinstimmung mit der Masterkamera-Richtungsinformation zu steuern (S 12, S20);

**dadurch gekennzeichnet, dass** das Verfahren weiter umfasst:

bei einer Slavekamera:

die gleiche Masterkamera-Richtungsinformation zu empfangen wie die Masterkamera;

die Masterkamera-Richtungsinformation in Slavekamera-Richtungsinformation umzuwandeln (S12 - S 18), die es der Slavekamera ermöglicht, auf der Grundlage der relativen Positionsdaten, die in der Slavekamera über die Masterkamera und die Slavekamera gespeichert sind, der Masterkamera zu folgen; und den Drehmechanismus der Slavekamera in Übereinstimmung mit der Slavekamera-Richtungsinformation zu steuern (S20).

**Revendications**

1.  Système de liaison d'appareils de prise de vues comprenant :

    une pluralité de dispositifs d'appareils de prise de vues (12) comprenant un appareil de prise de vues maître et un appareil de prise de vues esclave qui suit l'appareil de prise de vues maître, et
    un dispositif de commande (18, 20) connecté à la pluralité de dispositifs d'appareils de prise de vues,

    dans lequel le dispositif de commande fournit des informations d'orientation d'appareil de prise de vues maître qui ordonnent une orientation d'un appareil de prise de vues maître parmi la pluralité des dispositifs d'appareils de prise de vues à la pluralité de dispositifs d'appareils de prise de vues,
    le dispositif d'appareil de prise de vues maître est configuré pour commander un mécanisme de rotation (34) en fonction des informations d'orientation d'appareil de prise de vues maître,
    **caractérisé en ce que** :

    le dispositif d'appareil de prise de vues esclave répond aux mêmes informations d'orientation d'appareil de prise de vues maître que le dispositif d'appareil de prise de vues maître,
    l'appareil de prise de vues esclave est configuré pour transformer les informations d'orientation d'appareil de prise de vues maître en informations d'orientation d'appareil de prise de vues esclave qui permettent à l'appareil de prise de vues esclave de suivre l'appareil de prise de vues maître sur la base d'informations de position relative concernant l'appareil de prise de vues maître et l'appareil de prise de vues esclave, lesdites informations de position relative étant mémorisées au niveau de l'appareil de prise de vues esclave, et
    l'appareil de prise de vues esclave est configuré pour commander un mécanisme de rotation (34) en fonction des informations d'orientation d'appareil de prise de vues esclave.

2.  Dispositif d'appareil de prise de vues (12) qui peut fonctionner dans un mode de fonctionnement d'appareil de prise de vues maître et dans un mode de fonctionnement d'appareil de prise de vues esclave, le dispositif d'appareil de prise de vues comprenant :

    un module de communication (38) destiné à réaliser un couplage à un dispositif de commande en même temps qu'à un ou plusieurs autres dispositifs d'appareils de prise de vues, et destiné à recevoir à partir du dispositif de commande des informations d'orientation d'appareil de prise de vues maître qui ordonnent une orientation d'un appareil de prise de vues maître sélectionné par une pluralité de dispositifs d'appareils de prise de vues comprenant le dispositif d'appareil de prise de vues et les un ou plusieurs autres dispositifs d'appareils de prise de vues,

    **caractérisé en ce que** :

    le dispositif d'appareil de prise de vues répond aux mêmes informations d'orientation d'appareil de prise de vues maître à la fois lorsque le dispositif d'appareil de prise de vues est l'appareil de prise de vues maître et lorsque le dispositif d'appareil de prise de vues est un appareil de prise de vues esclave, et le dispositif d'appareil de prise de vues comprend en outre :

    un module de mémorisation d'informations de position relative (48) destiné à mémoriser des informations de position relative concernant le dispositif d'appareil de prise de vues et les un ou plusieurs autres dispositifs d'appareils de prise de vues,
    un module de transformation d'informations d'orientation (46) destiné à transformer les informations d'orientation d'appareil de prise de vues maître en informations d'orientation d'appareil de prise de vues esclave qui permettent au dispositif d'appareil de prise de vues de suivre l'appareil de prise de vues maître sur la base des informations de position relative lorsque l'un des un ou plusieurs autres dispositifs d'appareils de prise de vues est l'appareil de prise de vues maître, et

un module de commande de rotation (50) destiné à commander un mécanisme de rotation (34) du dispositif d'appareil de prise de vues conformément aux informations d'orientation d'appareil de prise de vues maître lorsque le dispositif d'appareil de prise de vues est le dispositif d'appareil de prise de vues maître, et destiné à commander le mécanisme de rotation (34) du dispositif d'appareil de prise de vues conformément aux informations d'orientation d'appareil de prise de vues esclave lorsque le dispositif d'appareil de prise de vues n'est pas l'appareil de prise de vues maître.

3. Dispositif d'appareil de prise de vues selon la revendication 2, **caractérisé en ce que** le dispositif d'appareil de prise de vues comprend :

un module de détermination maître/esclave (42) qui détermine si le dispositif d'appareil de prise de vues est l'appareil de prise de vues maître sur la base des informations d'orientation d'appareil de prise de vues maître fournies par le dispositif de commande, et
un module d'identification d'appareil de prise de vues maître (44) qui identifie un appareil de prise de vues maître parmi les autres dispositifs d'appareils de prise de vues lorsque le dispositif d'appareil de prise de vues n'est pas l'appareil de prise de vues maître,

où le module de transformation d'informations d'orientation (46) transforme les informations d'orientation d'appareil de prise de vues maître en informations d'orientation d'appareil de prise de vues esclave sur la base des informations de position relative de l'un des autres dispositifs d'appareils de prise de vues identifiés par le module d'identification d'appareil de prise de vues maître (44) dans les informations de position relative concernant les autres dispositifs d'appareils de prise de vues mémorisées dans le module de mémorisation d'informations de position relative (48).

4. Dispositif d'appareil de prise de vues selon la revendication 3, **caractérisé en ce que** le module de communication (38) acquière les informations d'orientation d'appareil de prise de vues maître indépendamment du fait de savoir si une destination concerne le dispositif d'appareil de prise de vues ou l'un des un ou plusieurs autres dispositifs d'appareils de prise de vues, et
le module de détermination maître/esclave (42) et le module d'identification d'appareil de prise de vues maître (44) exécutent un processus de détermination et un processus d'identification sur la base d'informations de destination dans les informations d'orientation d'appareil de prise de vues maître.

5. Système de liaison d'appareils de prise de vues comprenant :

une pluralité de dispositifs d'appareils de prise de vues rotatifs (12),
un dispositif de commande (18, 20) connecté à une pluralité de dispositifs d'appareils de prise de vues;

dans lequel le dispositif de commande est configuré pour fournir des informations d'orientation d'appareil de prise de vues maître qui ordonnent la direction d'un appareil de prise de vues maître sélectionné parmi la pluralité de dispositifs d'appareils de prise de vues à la pluralité de dispositifs d'appareils de prise de vues comprenant l'appareil de prise de vues maître,
**caractérisé en ce que** :

au moins un des dispositifs d'appareils de prise de vues (12) est un dispositif d'appareil de prise de vues selon l'une quelconque des revendications 2 à 4.

6. Système de liaison d'appareils de prise de vues selon la revendication 5, dans lequel chaque dispositif de ladite pluralité de dispositifs d'appareils de prise de vues rotatifs (12) est un dispositif d'appareil de prise de vues selon l'une quelconque des revendications 2 à 4.

7. Procédé de commande de liaison d'appareils de prise de vues, comprenant :

la fourniture d'informations d'orientation d'appareil de prise de vues maître qui ordonnent une orientation d'un appareil de prise de vues maître à une pluralité d'appareils de prise de vues comprenant l'appareil de prise de vues maître et un appareil de prise de vues esclave qui suit l'appareil de prise de vues maître,
au niveau de l'appareil de prise de vues maître :

la réception des informations d'orientation d'appareil de prise de vues maître et
la commande (S12, S20) d'un mécanisme de rotation de l'appareil de prise de vues maître conformément

**EP 1 619 897 B1**

aux informations d'orientation d'appareil de prise de vues maître,

**caractérisé en ce que** le procédé comprend en outre :

au niveau d'un appareil de prise de vues esclave :

la réception des mêmes informations d'orientation d'appareil de prise de vues maître que celles pour l'appareil de prise de vues maître,
la transformation (S12 à S18) des informations d'orientation d'appareil de prise de vues maître en informations d'orientation d'appareil de prise de vues esclave qui permettent à l'appareil de prise de vues esclave de suivre l'appareil de prise de vues maître sur la base d'informations de position relative mémorisées dans l'appareil de prise de vues esclave concernant l'appareil de prise de vues maître et l'appareil de prise de vues esclave, et
la commande (S20) d'un mécanisme rotatif de l'appareil de prise de vues esclave conformément aux informations d'orientation d'appareil de prise de vues esclave.

14

EP 1 619 897 B1

FIG. 1

15

FIG. 2

12

TO FOUR-SCREEN
UNIT 14

36 VIDEO
OUTPUT
MODULE

TO PERSONAL
COMPUTER 20

38 COMMUNI-
CATION
MODULE

30 CONTROL MODULE

40 IMAGING
CONTROL
MODULE

42 MASTER/
SLAVE
DETERMINING
MODULE

48 POSITION
INFORMATION
TABLE
STORING
MODULE

44 MASTER
CAMERA
IDENTIFYING
MODULE

46 DIRECTION
INFORMATION
TRANSFORM
-ING MODULE

50 ROTATION
CONTROL
MODULE

32 IMAGING
MODULE

34 ROTATING
MECHANISM

16

| OTHER CAMERA NUMBER | RELATIVE POSITION INFORMATION (DISTANCE BETWEEN CAMERAS) |
|---|---|
| #1 | 0. 5m |
| #2 | 1m |
| #3 | 5m |

FIG. 3

FIG. 4

FIG. 5

START

EXTRACT AN ADDRESS
FROM A COMMAND — S10

IS THE ADDRESS
FOR THAT CAMERA? — S12

Y

N

IDENTIFY A MASTER CAMERA
BY THE ADDRESS — S14

READ RELATIVE POSITION
INFORMATION FROM THE POSITION
INFORMATION TABLE — S16

TRANSFORM MASTER CAMERA
DIRECTION INFORMATION TO SLAVE
CAMERA DIRECTION INFORMATION — S18

ROTATE THE CAMERA — S20

NOTIFY THE CAMERA POSITION — S22

END

FIG. 6